# EUROPEAN PATENT SPECIFICATION

(11) **EP 3 585 134 B1**
(45) Date of publication and mention of the grant of the patent: **03.08.2022**
(21) Application number: 18178214.5
(22) Date of filing: 18.06.2018
(51) Int. Cl.: H05B 3/24, B60H 1/22, F24H 3/04, F24H 9/18, H01C 1/14, H01C 7/02, F24H 9/1863

(54) **PTC HEATING MODULE**
PTC-HEIZMODUL
MODULE DE CHAUFFAGE PTC

(43) Date of publication of application: 25.12.2019
(73) Proprietor: Mahle International GmbH, 70376 Stuttgart (DE)
(72) Inventor: KOHL, Michael, 74321 Bietigheim-Bissingen (DE); PÄTZOLD, Stefan, 70347 Stuttgart (DE); TEICHMANN, Tim, 76185 Karlsruhe (DE); VIEHRIG, Falk, 70469 Stuttgart (DE)
(74) Representative: BRP Renaud & Partner mbB Rechtsanwälte Patentanwälte Steuerberater

(56) References cited:
- EP-A1- 0 500 955
- EP-A1- 1 492 131
- EP-A1- 2 637 475
- US-A1- 2011 062 137
- US-A1- 2013 161 306

## Description

The invention relates to a PTC heating module for heating a fluid according to the preamble of claim 1.

An electrical heater for a hybrid or electrical vehicle normally comprises a number of PTC heating modules (PTC: positive temperature coefficient) with a number of PTC thermistors consisting of ceramic resistors. The resistors have a temperature-dependent electric resistance, which increases as the temperature increases. As a result, independently of marginal conditions such as voltage or nominal resistance, the temperature developing at the PTC thermistor is a temperature which varies very little. Overheating of the PTC thermistor is therefore advantageously prevented. The electric heater may be used, for example, in cold ambient temperatures during the start phase and when driving in order to maintain the temperature in the passenger compartment or in the battery. Air, fresh air and/or recirculated air is heated either directly by means of the electric heater or indirectly by means of a heat exchanger, to which another fluid, e.g. a coolant is supplied, which is heated by means of the electric heater. Subsequently the heated air is directed into the passenger cabin. In the passenger cabin the heated air can dissipate the stored heat and thus heat the cabin. With an electric vehicle the electric heater is usually the only means for heating.

EP 0 500 955 A1 discloses a PTC thermistor, wherein a first electrode including a metal other than silver and a second electrode includes silver as its main component. The first electrode is positioned on PTC thermistor by an electron beam vapor deposition process and the second electrode is positioned on the top of the second electrode by the thick film printing process.

EP 1 492 131 A1 discloses a temperature sensor i.e. fuse including a conductive polymer having PTC characteristics and electrodes joined to the conductive polymer. The electrodes are provided along two sides of the plate-like conductive polymer and are separated from the edges of the sides.

In a hybrid or electric vehicle a PTC heating module is supplied from the drive battery which currently provides a voltage of between 150V and 500 V. Future voltage demand is up to 800V. Contact protection is therefore paramount for the protection of the passengers. In particular all electrically conducting elements and elements which can be contacted from outside must be potential-free. To this end the PTC thermistor is electrically insulated towards the outside by an electrical insulation, wherein the electrical insulation is heat-conducting in order to dissipate the heat right through the insulation. Furthermore the contact electrodes in the PTC thermistor must be adequately spaced apart, in order to maintain the creapage and clearance distances, wherein the distance between the two contact electrodes increases as the voltage increases. In a conventional PTC heating module the two contact electrodes are in full-surface contact with the PTC thermistor, so that the distance between the contact electrodes corresponds to a thickness of the PTC thermistor.

As the voltage increases the thickness of the PTC thermistor must therefore be increased in order to maintain the creapage and clearance distances in the PTC heating module. As such for a voltage of 400V in the PTC heating module the necessary distance between the contact electrodes is approx. 2mm. For a voltage of 800V the distance between the two contact electrodes ought therefore to be increased to approx. 4mm. But since ceramic resistors have low heat conductivity, it is difficult, for higher thicknesses, to dissipate the heat from an interior area of the PTC thermistor. As a result the temperature in the interior area of the PTC thermistor rises and with it its electric resistance. This disadvantageously reduces the output of the PTC heating module.

It is thus an objective of the invention to propose an improved or at least alternative embodiment for a generic PTC heating module, with which the described disadvantages are overcome. In particular it is an objective of the invention, to maintain standard-complying distances for the creapage and clearance distances, without affecting the output of the PTC heating module.

According to the invention this objective is achieved with the subject of independent claim 1. Advantageous embodiments are the subject of the dependent claims.

An inventive PTC heating module for heating a fluid comprises at least one cuboid PTC thermistor with two main sides opposite each other, which are arranged spaced apart and which define a thermistor thickness of the PTC thermistor. The PTC heating module further comprises two contact plates with a PTC thermistor each arranged between them and with which the respective PTC thermistor is electrically contacted. According to the invention the PTC heating module comprises at least one contact socket with a contact side, the contact socket resting on one side electrically conductively with its contact side against the one main side of the respective PTC thermistor and on the other side resting electrically conductively against the one contact plate. Due to a thickness of the at least one contact socket a distance between the one contact plate and the other contact plate is enlarged. Furthermore a geometric contact surface between the main side of the respective PTC thermistor and the contact side of the at least one contact socket is smaller than a geometric surface of the main side of the respective PTC thermistor. As a result a clearance distance from the one contact plate to the other contact plate and a creapage distance from the at least one contact socket to the other contact plate is larger than the thermistor thickness of the PTC thermistor.

Conveniently the contact plates and the at least one contact socket in the PTC heating module according to the invention are both heat- and electrically conducting, so that the specified voltage can be applied to the respective PTC thermistor through the contact plates and the at least one contact socket, and the heat generated in the respective PTC thermistor can be effectively dissipated to outside. The distance between the two contact plates can be advantageously adapted to the specified voltage, not via the thermistor thickness, but via the thickness of the contact socket. A clearance distance between the one contact plate and the other contact plate and corresponding to the distance between them is larger than the thermistor thickness of the respective PTC thermistor. A creapage distance from the at least one contact socket to the other contact plate can also be adapted to the specified voltage, not by means of the thermistor thickness, but the contact surface. As a result the thermistor thickness of the respective PTC thermistor is independent of the specified voltage and can in contrast to conventional solutions be adapted to the desired output of the PTC heating module. A short-circuit in the PTC heating module is thus avoidable, for a random specified voltage, independently of the thermistor thickness.

The term " larger" in this context means that a creapage and/or clearance distance between the one and the other contact plate is over 100% of the thermistor thickness of the respective thermistor. It is provided that the creapage and/or clearance distances lies between 110% and 500%, especially between 120% and 300%, of the thermistor thickness of the respective PTC thermistor. A contact surface is a geometric surface, on which the contact side of the at least one contact socket rests against the main side of the PTC thermistor and is in electrically conducting contact with the same. A geometric surface of the contact side of the at least one contact socket can thus correspond to the geometric contact surface or be larger than the contact surface. According to the invention, a geometric surface of the respective contact plate is larger than the geometric surface of the main side of the respective PTC thermistor and larger than the contact surface. In particular, the heat generated in the PTC thermistor can thereby be dissipated directly or via the contact socket over a large surface to the respective contact plate and passed on by the same to outside. As a result the output of the PTC heating module can be distinctly increased.

With one advantageous design of the PTC heating module it may be provided that the respective PTC thermistor has two contact sockets arranged on it, which with the respective contact surfaces rest against the main surfaces of the respective PTC thermistor. With this design of the PTC heating module a creapage and/or clearance distance between the two contact sockets and/or the two contact plates is conveniently larger than the thermistor thickness of the respective PTC thermistor. Advantageously the PTC heating module may comprise a number of PTC thermistors, which in longitudinal direction are arranged adjacently to each other between the contact plates and electrically contacted with the same.

With a further development of the PTC heating module according to the invention it is provided that a width of the main side of the respective PTC thermistor defining the geometric surface is larger than a width of the contact side of the at least one contact socket defining the geometric surface. Further the respective PTC thermistor protrudes on both sides in width direction from the at least one contact socket. Consequently the contact surface between the contact side of the at least one contact socket and the one main side of the respective PTC thermistor is smaller than the geometric surface of the one main side of the respective PTC thermistor. A creapage distance between the at least one contact socket and the other contact plate is, as a result, larger than the thermistor thickness of the respective PTC thermistor.

Advantageously it may be provided that a length of the main side of the PTC thermistor defining the geometric surface is larger than a length of the contact side of the at least one contact socket defining the geometric surface. The respective PTC thermistor then protrudes on both sides in longitudinal direction from the at least one contact socket. Correspondingly the contact surface between the contact side of the at least one contact socket and the one main side of the respective PTC thermistor is smaller than the geometric surface of the one main side of the respective PTC thermistor. As a result the creapage distance between the at least one contact socket and the other contact plate is larger than the thermistor thickness of the respective PTC thermistor.

With a further development of the PTC heating module according to the invention it is provided that an electrically conducting coating is fixed to the one main side of the PTC thermistor and is arranged between the contact side of the at least one contact socket and the one main side of the respective PTC thermistor. Furthermore, a geometric surface of the coating corresponds, i.e. with a deviation up to 15%, to the geometric contact surface between the contact side of the at least one contact socket and the one main side of the PTC thermistor. The coating may for example consist of silver und may reduce the electric contact resistance between the main side of the respective PTC thermistor and the contact side of the at least one contact socket. The geometric surface of the coating dimensioned in this way additionally prevents a shorter creapage distance, i.e. a distance deviating by more than 15%, from developing between the electrically conducting coating and the other contact plate than between the at least one contact socket of the other contact plate.

Advantageously a geometric cross-sectional area of the at least one contact socket may increase consistently or in stages from the contact side in direction of the one contact plate. Thus for example, the geometric cross-sectional area of the at least one contact socket may increase up to 150% from the contact side towards the one contact plate. In particular the heat generated by the respective PTC thermistor may be dissipated faster and passed onto the one contact plate via a larger geometric cross-sectional area. As a result the output of the PTC heating module can be altogether increased. Alternatively or additionally it may be provided that the at least one contact socket is formed in one piece with the one contact plate. In particular the contact resistance between the one contact plate and the at least one contact socket may be reduced.

With a further development of the PTC heating module according to the invention it is provided that the one contact plate forms a first housing part and the other contact plate forms a second housing part electrically insulated from the first housing part. The first housing part und the second housing part thus form a housing encasing the respective PTC thermistor. As a result there is therefore no need for an additional housing, in which the contact plates would have to be anchored, and production can thus be simplified. In addition this allows the heat generated in the respective PTC thermistor to be dissipated via fewer layers towards the outside leading, as a result, to an increase in the output of the respective PTC heating module.

In order to ensure a safe contact protection of the PTC heating module, the housing may be electrically insulated, at least in sections, towards the outside by an insulating layer. Conveniently the insulating layer is heat-conducting, so that the heat generated in the respective PTC thermistor can be passed on efficiently to the outside. With the two-part housing consisting of the contact plates which encase the respective PTC thermistor the insulating layer forms the outer layer with the largest heat-dissipating surface of the PTC heating module. Since normally the insulating layer comprises a lower heat conductivity than the contact plates, the lower heat conductivity of the insulating layer can be compensated for by the largest heat-dissipating surface and the output of the PTC heating module can be altogether increased.

Alternatively or additionally it may be provided that the housing is filled, at least in sections, with a heat-conducting and electrically insulating material. Conveniently the heat-conducting and electrically insulating material comprises a higher heat conductivity than air, so that the heat generated in the respective PTC thermistor can be efficiently dissipated to outside.

In summary, in the PTC heating module according to the invention, the distance between the two contact plates can in a simple way be adapted to the specified voltage, not by the thermistor thickness, but by the thickness of the contact socket. A clearance distance defined by the distance between the one contact plate and the other contact plate is larger than the thermistor thickness of the respective PTC thermistor. A creapage distance between the at least one contact socket and the other contact plate again, can be adapted to the specified voltage, not by the thermistor thickness, but by the contact surface. The thermistor thickness of the respective PTC thermistor is therefore independent of the specified voltage and can be adapted, in comparison to conventional solutions, to the desired output of the PTC heating module.

Further important features and advantages of the invention are revealed in the sub-claims, the drawings and the associated description of the figures with reference to the drawings.

Preferred exemplary embodiments of the invention are depicted in the drawings and explained in detail in the description hereunder, wherein identical reference symbols refer to identical or similar or functionally identical components, in which, schematically,
- fig. 1: shows a sectional view of a PTC heating module according to the invention in a first embodiment;
- figs. 2 to 5: show further sectional views of the PTC heating module according to the invention in the first embodiment;
- fig. 6: shows a sectional view of a PTC heating module according to the invention in a second embodiment;
- figs. 7 to 10: show further sectional views of the PTC heating module according to the invention in the second embodiment;
- fig. 11: shows a sectional view of a PTC heating module according to the invention of a third embodiment;
- figs. 12 to 15: show further sectional views of the PTC heating module according to the invention in the third embodiment;
- fig. 16: shows a view of contacting plates in the third embodiment of the PTC heating module;
- fig. 17: shows a sectional view of a PTC heating module with a two-part housing.

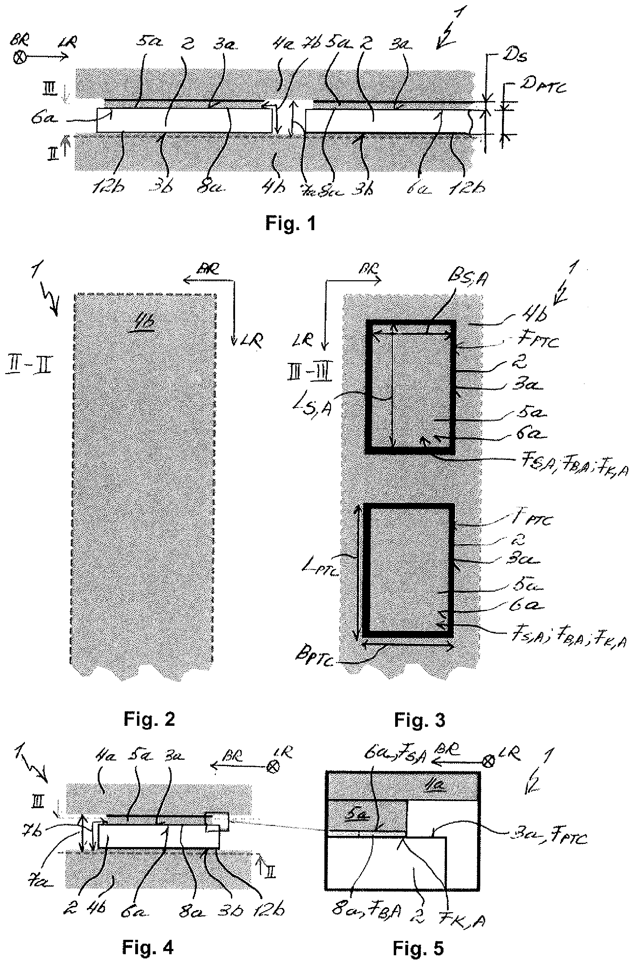

Figs. 1 to 5 show sectional views of a PTC heating module 1 according to the invention in a first embodiment. The PTC heating module 1 according to the invention defines a longitudinal direction LR and a width direction BR which are at right angles to one another. Fig. 1 shows a sectional view of the PTC heating module 1 vertically to the width direction BR. Fig. 2 and fig. 3 are sectional views of the PTC heating module 1 through a plane respectively defined by the longitudinal direction LR and the width direction BR. Fig. 4 shows a sectional view of the PTC heating module 1 at right angles to the longitudinal direction LR of the PTC heating module 1. In fig. 5 an enlarged cut-out of the PTC heating module 1 from fig. 4 is shown. Basically the thickness of the individual elements in the PTC heating module 1 is determined vertically to a plane defined by the longitudinal direction LR and width direction BR. Further the length of individual elements in the PTC heating module 1 is determined in longitudinal direction LR and the width of individual elements in the PTC heating module 1 is determined in width direction BR.

The PTC heating module 1 according to the invention is provided for heating a fluid such as air or coolant in a hybrid or electric vehicle. The PTC heating module 1 comprises a number of PTC thermistors 2 with respectively two main sides 3a and 3b opposite each other, which are spaced apart and define a thermistor thickness D_{PTC} of the respective PTC thermistor 2. The PTC heating module 1 further comprises two contact plates 4a and 4b, between which the respective PTC thermistor 2 is arranged. The respective PTC thermistors 2 are affixed next to each other in longitudinal direction LR between the two contact plates 4a and 4b.

In the first embodiment the PTC heating module 1 comprises a contact socket 5a with a contact side 6a, the contact socket 5a on one side resting electrically conductively with its contact side 6a against the one main side 3a of the respective PTC thermistor 2 and on the other side resting electrically conductively against the one contact plate 4a. The contact socket 5a has a thickness D_{S,A}, which increases a distance between the contact plates 4a and 4b. With its contact side 6a the contact socket 5a rests full-surface against the main side 3a of the respective PTC thermistor 2, so that a geometric contact surface F_{K,A} between the main side 3a of the respective PTC thermistor 2 and the contact side 6a of the contact socket corresponds to a geometric surface F_{S,A} of the contact side 6a. The geometric contact surface F_{K,A} and the geometric surface F_{S,A} of the contact side 6a of the contact socket 5a are smaller than the geometric surface F_{PTC} of the main side 3a of the respective PTC thermistor 2. The width B_{PTC} of the main side 3a of the respective PTC thermistor 2 which defines the geometric surface F_{PTC} is larger than a width B_{S,A} of the contact side 6a of the contact socket 5a, which defines a geometric surface F_{S,A}. Further a length L_{PTC} of the main side 3a of the respective PTC thermistor 2 which defines the geometric surface F_{PTC} is larger than a length L_{S,A} of the contact side 6a of the contact socket 5a which defines the geometric surface F_{S,A}. As a result the respective PTC thermistor 2 is protruding from the contact socket 5a in both longitudinal direction LR and in width direction BR. This leads to a clearance distance 7a between the contact plates 4a and 4b and a creapage distance 7b between the contact socket 5a and the contact plate 4b being larger than the thermistor thickness D_{PTC} of the PTC thermistor 2. The clearance distance 7a between the two contact plates 4a and 4b is defined by the shortest distance and thus by the distance of the two contact plates 4a und 4b from each other. The creapage distance 7b between the contact socket 5a and the contact plate 4b is defined by the shortest distance along the surface of the PTC thermistor 2 between the contact socket 5a and the contact plate 4b. The creapage distance 7b in longitudinal direction LR according to fig. 1 and in width direction BR according to fig. 4 are identical in this embodiment, but can also differ. It is provided that the creapage and/or clearance distances 7a and 7b lies over 100%, especially between 110% and 500%, especially between 120% and 300%, of the thermistor thickness D_{PTC} of the respective PTC thermistor 2.

The contact socket 5a and the contact plates 4a and 4b are conveniently electrically conducting, so that the respective PTC thermistor 2 can be electrically connected through the contact socket 5a and the contact plate 4a to a positive pole and through the contact plate 4b to a negative pole, or vice versa. Further conveniently the contact plates 4a and 4b and the contact socket 5a are heat-conducting, so that the heat generated in the respective PTC thermistor 2 can be effectively dissipated to outside via the contact plates 4a and 4b and the contact socket 5a. In order to reduce the contact resistance between the contact socket 5a and the respective PTC thermistor 2, the PTC heating module 1 comprises an electrically conducting coating 8a, which is arranged between the main side 3a of the PTC thermistor 2 and the contact side 6a of the contact socket 5a. The coating 8a may for example consist of silver or another metal. The coating 8a can be arranged on the main side 3a of the PTC thermistor 2 and the PTC thermistor 2 with the coating 8a can be fixed to the contact socket 5a cohesively by soldering or gluing or mechanical by pressing. Basically a thickness of the coating 8a is low, so that the contact plate 4a and the PTC thermistor 2 have a distance from each other which is approx. equal to the thickness D_{S,A} of the contact socket 5a. A geometric surface F_{B,A} of the coating 8a corresponds, i.e. with a deviation of up to 15%, to the the geometric surface F_{S,A} of the contact side 6a of the contact socket 5a, so that the creapage distance 7b between the contact socket 5a and the contact plate 4b is not shortened. The PTC heating module 1 comprises further an electrically conducting coating 12b, which is arranged on the main side 3b of the PTC thermistor 2. The PTC thermistor 2 with the coating 12b can be fixed to the contact plate 4b in the same manner as on the contact socket 5a. The coating 12b may for example consist of silver or another metal. Basically a thickness of the coating 12b is low, so that the contact plate 4b and the PTC thermistor 2 have a distance from each other which is negligible small.

In the PTC heating module 1 the distance and thus the clearance distance 7a between the two contact plates 4a and 4b can be adapted to a specified voltage, not by the thermistor thickness D_{PTC}, but by the thickness D_{S,A} of the contact socket 5a. The creapage distance 7b can also be adapted by the contact surface F_{K,A}. The thermistor thickness D_{PTC} of the respective PTC thermistor 2 is therefore independent of the specified voltage and can be advantageously reduced, in comparison to conventional solutions.

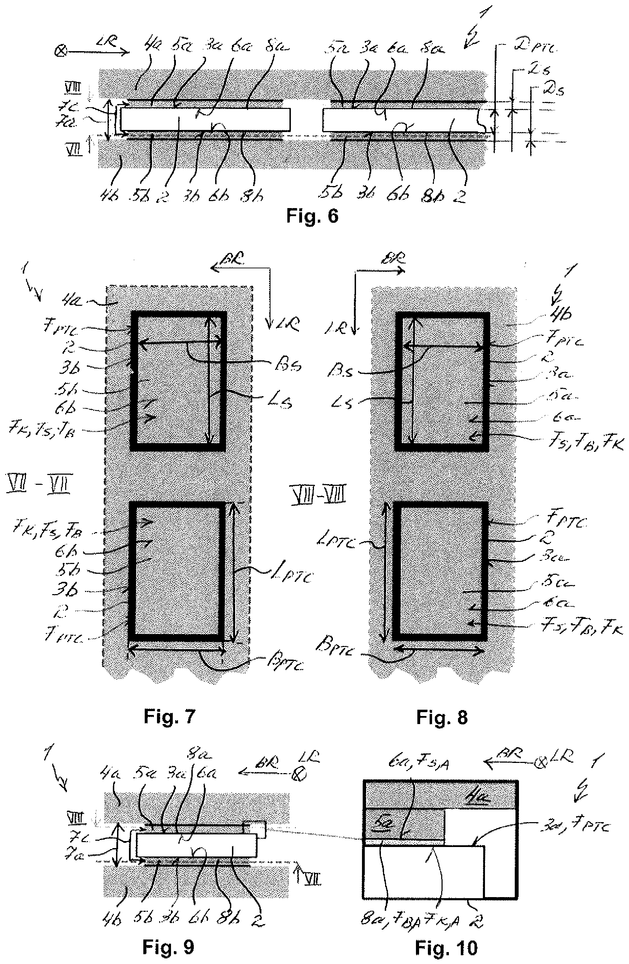

Figs. 6 to 10 show sectional views of the PTC heating module 1 according to the invention in a second embodiment. Fig. 6 shows a sectional view of the PTC heating module 1 vertically to the width direction BR. In fig. 7 and fig. 8 sectional views of the PTC heating module 1 are shown through a plane defined by the longitudinal direction LR and width direction BR. Fig. 9 shows a sectional view of the PTC heating module 1 vertically to the longitudinal direction LR of the PTC heating module 1. In fig. 10 an enlarged cut-out of the PTC heating module 1 from fig. 9 is shown. Here again the thickness of individual elements in the PTC heating module 1 is determined vertically to a plane defined by the longitudinal direction LR and the width direction BR. The length of individual elements in the PTC heating module 1 and the width thereof are defined correspondingly in longitudinal direction LR / in width direction BR. Next the differences between the two embodiments of the PTC heating modules 1 will be separately discussed. In other respects the construction of the PTC heating module 1 is identical in both embodiments.

In the second embodiment of the PTC heating module a contact socket 5b is arranged between the PTC thermistor 2 and the contact plate 4b. The contact socket 5b rests with one contact side 6b against the main side 3b of the respective PTC thermistor 2. In addition an electrically conducting coating 8b is arranged between the main side 3b of the PTC thermistor 2 and the contact side 6b of the contact socket 5b. The construction and arrangement of the contact socket 5b substantially corresponds to the construction and arrangement of the contact socket 5a on the PTC thermistor 2. In difference to the first embodiment of the PTC heating module 1 here the distance between the two contact plates 4a and 4b and thus the clearance distance 7a is composed of the thermistor thickness D_{PTC} of the PTC thermistor 2 and the respective thicknesses D_{S,A} and D_{S,B} of the contact sockets 5a and 5b. Here too, a thickness of the coating 8b is negligibly small. In this exemplary embodiment the thicknesses D_{S,A} and D_{S,B} of the two contact sockets 5a and 5b are identical, but they may be different from one another. The respective geometric contact surfaces F_{K,A} and F_{K,B} in this embodiment of the PTC heating module 1 also corresponds to the respective geometric surfaces F_{S,A} and F_{S,B} of the contact socket 5a and 5b and are respectively smaller than the geometric surfaces F_{PTC} of the respective main sides 3a and 3b of the respective PTC thermistor 2, so that a creapage distance 7c between the two contact socket 5a and 5b is larger than the thermistor thickness D_{PTC}. The creapage distance 7c between the contact sockets 5a and 5b is defined by the shortest distance along the surface of the PTC thermistor 2 between the contact sockets 5a and 5b. In this embodiment, the creapage distance 7c in longitudinal direction LR according to fig. 1 and in width direction BR according to fig. 4 are identical, but can also differ.

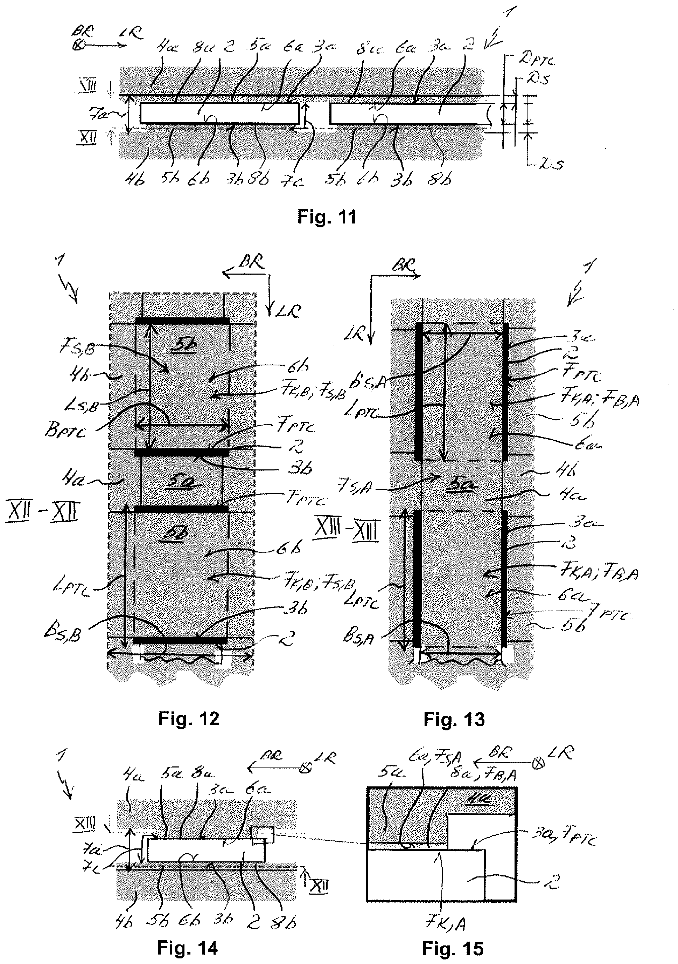

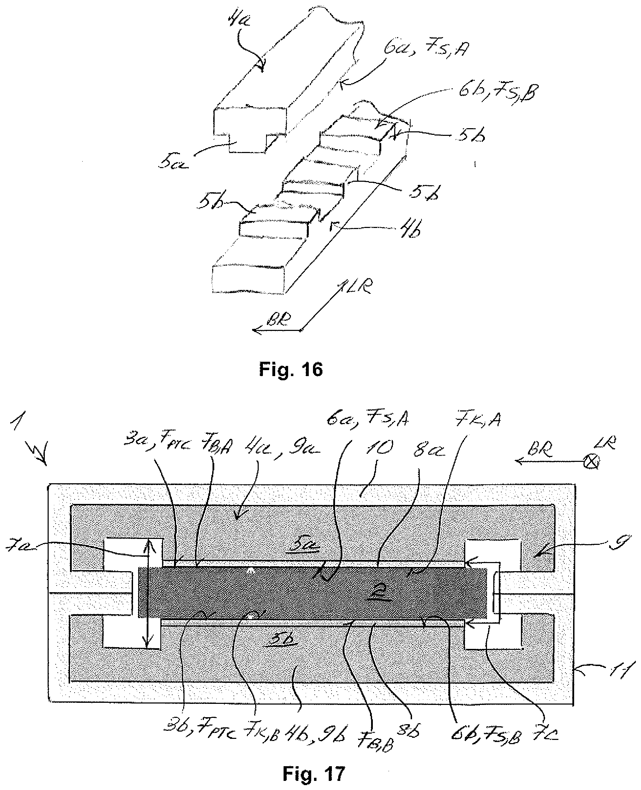

Figs. 11 to 15 show sectional views of the PTC heating module 1 according to the invention in a third embodiment. Fig. 11 shows a sectional view of the PTC heating module 1 vertically to the width direction BR. In Fig. 12 and fig. 13 sectional views of the PTC heating module 1 are shown through a plane defined respectively by a longitudinal direction LR and a width direction BR. Fig. 14 shows a sectional view of the PTC heating module 1 vertically to the longitudinal direction LR of the PTC heating module 1. Fig. 15 shows an enlarged cut-out of the PTC heating module 1 shown in fig. 14. Fig. 16 shows a view of the contact plates 4a and 4b of the PTC heating module 1. Corresponding to the above definition here too the thickness of individual elements in the PTC heating module 1 is determined vertically to a plane defined by the longitudinal direction LR and width direction BR. The length and width of individual elements in the PTC heating module 1 are defined in longitudinal direction LR and width direction BR.

Next the differences between the two embodiments of PTC heating modules 1 will be separately discussed. In other respects the construction of the PTC heating module 1 is identical in both embodiments.

In the third embodiment of the PTC heating module 1 the respective PTC thermistors 2 are electrically contacted by a common contact socket 5a with the contact plate 4a. The contact socket 5a is formed integrally with the contact plate 4a. The common contact plate 5a extends in longitudinal direction and the contact side 6a of the contact socket 5a rests against the main side 3a of the PTC thermistors 2. The respective geometric contact surface F_{K,A} is smaller than the geometric surface F_{S,A} of the contact side 6a of the contact socket 5a and is defined respectively by the width B_{S,A} of the contact side 6a of the contact socket 5a and the length L_{PTC} of the main side 3a of the respective PTC thermistor 2. The width B_{S,A} of the contact side 6a of the contact socket 5a is smaller than the width B_{PTC} of the main side 3a of the respective PTC thermistor 2. As a result the respective PTC thermistor 2 protrudes from the contact socket 5a on both sides in width direction BR, but not in longitudinal direction LR. The contact surface F_{K,A} is thus smaller than the geometric surface F_{PTC} of the main side 3a, and a creapage distance 7c between the contact sockets 5a and 5b is larger than the thermistor thickness D_{PTC} of the PTC thermistor 2.

The PTC heating module 1 here comprises a number of contact sockets 5b, on which in deviation from the second embodiment of the PTC heating module 1 the geometric surface F_{S,B} is larger than the contact surface F_{K,B}. The contact surface F_{K,B} is defined by the length L_{S,B} of the contact side 6b of the contact socket 5b and the width B_{PTC} of the main side 3b of the PTC thermistor 2. The length L_{S,B} of the contact side 6b of the contact socket 5b is smaller than the length L_{PTC} of the main side 3b of the respective PTC thermistor 2, so that the respective PTC thermistor 2 protrudes from the contact socket 5b, not in width direction BR, but on both sides in longitudinal direction LR. As a result the contact surface F_{K,B} is smaller than the geometric surface F_{PTC} and a creapage distance 7c between the contact sockets 5a and 5b is larger than the thermistor thickness D_{PTC} of the PTC thermistor 2. The respective contact sockets 5b are formed integrally with the contact plate 4b.

The creapage distance 7c between the contact sockets 5a and 5b is therefore defined by the contact socket 5a when viewed in width direction BR, und by the contact socket 5b when viewed in longitudinal direction LR, on the respective PTC thermistor 2. In this embodiment the socket 5a and the socket 5b are not identical. In this case, the contact surfaces F_{K,A} and F_{K,B}, the lengths L_{S,A} and L_{S,B} of the contact sides 6a and 6b, the widths B_{S,A} and B_{S,B} of the contact sides 6a and 6b are different. Furthermore, the creapage distance 7c in longitudinal direction LR differs from the creapage distance 7c in width direction BR, but can be identical to it.

Fig. 17 shows a sectional view of the PTC heating module 1 according to the invention. Here the contact plate 4a forms a first housing part 9a and the contact plate 4b forms a second housing part 9b. The first housing part 9a and the second housing part 9b thus form a housing 9 encasing the respective PTC thermistors 2. The first housing part 9a and the second housing part 9b are electrically insulated by an insulation 10 towards the outside and from each other. The insulation 10 is conveniently heat-conducting so that the heat generated in the respective PTC thermistor 2 can be dissipated to outside. Advantageously the PTC heating module 1 comprises only a few layers so that the heat can be efficiently dissipated towards the outside. Further the insulating layer 10 forms the outermost layer with the largest heat-dissipating surface 11 of the PTC heating module 1. Since the insulating layer 10 usually comprises a lower heat conductivity than the contact plates 4a and 4b, the larger heat-dissipating surface 11 can compensate for the lower heat conductivity of the insulating layer 10. Thus the output of the PTC heating module 1 can be altogether increased. In fig. 17 the construction of the contact sockets 5a and 5b corresponds to the second embodiment of the PTC heating module 1 in figs. 6 to 10. The difference here is that the contact sockets 5a and 5B are designed integrally with the contact plates 4a and 4b.

In conclusion the distance between the two contact plates 4a and 4b in the PTC heating module 1 according to the invention can be adapted to the specified voltage in a simple way, not by the thermistor thickness D_{PTC}, but by the adjusted thickness D_{S,A} and/or D_{S,B} of the contact socket. The clearance distance 7a defined by the distance of the contact plates 4a and 4b is larger than the thermistor thickness D_{PTC} of the respective PTC thermistor 2. Further the creapage distances 7b und 7c can be adapted to the specified voltage, not by the thermistor thickness D_{PTC}, but by the contact surface F_{K}. The thermistor thickness D_{PTC} of the respective PTC thermistor 2 is therefore independent of the specified voltage and can in comparison to conventional solutions be adapted to the desired output of the PTC heating module 1.

## Claims

1. A PTC heating module (1) for heating a fluid,
- wherein the PTC heating module (1) comprises at least one cuboid PTC thermistor (2) with two main sides (3a, 3b) opposite each other, which are spaced apart and define a thermistor thickness (D_{PTC}) of the PTC thermistor (2);
- wherein the PTC heating module (1) comprises two contact plates (4a, 4b), between which the respective PTC thermistor (2) is arranged and with which the respective PTC thermistor (2) is electrically contacted;
- wherein the PTC heating module (1) comprises at least one contact socket (5a, 5b) with a contact side (6a, 6b), the contact socket (5a, 5b) resting on one side electrically conductively with its contact side (6a, 6b) against the one main side (3a, 3b) of the respective PTC thermistor (2) and on the other side resting electrically conductively against the one contact plate (4a, 4b);
- wherein a geometric contact surface (F_{K,A}, F_{K,B}) between the main side (3a, 3b) of the respective PTC thermistor (2) and the contact side (6a, 6b) of the at least one contact socket (5a, 5b) is smaller than a geometric surface (F_{PTC}) of the main side (3a, 3b) of the respective PTC thermistor (2);
- wherein, due to a thickness (D_{S}) of the at least one contact socket (5a, 5b) a distance between the one contact plate (4a, 4b) and the other contact plate (4a, 4b) is enlarged,
- so that a clearance distance (7a) from the one contact plate (4a, 4b) to the other contact plate (4a, 4b) and a creapage distance (7b) from the at least one contact socket (5a, 5b) to the other contact plate (4a, 4b) is larger than the thermistor thickness (D_{PTC}) of the PTC thermistor (2),
**characterized in that** a geometric surface of the respective contact plate (4a, 4b) is larger than the geometric surface of the main side (3a, 3b) of the respective PTC thermistor (2).

2. The PTC heating module (1) according to claim 1,
**characterised in that**,
- the PTC heating module (1) comprises two contact sockets (5a, 5b) with the contact sides (6a, 6b), the respective contact socket (5a, 5b) resting on one side electrically conductively with its contact side (6a, 6b) against the respective main side (3a, 3b) of the PTC thermistor (2) and on the other side resting electrically conductively against the respective contact plate (4a, 4b), and
- a creapage distance (7c) between the two contact sockets (5a, 5b) is larger than the thermistor thickness (D_{PTC}) of the PTC thermistor (2).

3. The PTC heating module (1) according to claim 1 or 2,
**characterised in that**
- a width (B_{PTC}) of the main side (3a, 3b) of the respective PTC thermistor (2) defining the geometric surface (F_{PTC}) is larger than a width (B_{S,A}, B_{S,B}) of the contact side (6a, 6b) of the at least one contact socket (5a, 5b) defining a geometric surface (Fs,A, F_{S,B}), and
- the respective PTC thermistor (2) protrudes on both sides from the at least one contact socket (5a, 5b) in width direction (BR), so that a creapage distance (7) between the at least one contact socket (5a, 5b) and the other contact plate (4a, 4b) is larger than the thermistor thickness (D_{PTC}) of the PTC thermistor (2).

4. The PTC heating module (1) according to one of the preceding claims, **characterised in that**
- a length (L_{PTC}) of the main side (3a, 3b) of the respective PTC thermistor (2) defining the geometric surface (F_{PTC}) is larger than a length (L_{S,A}, L_{S,B}) of the contact side (6a, 6b) of the at least one contact socket (5a, 5b) defining the geometric surface (F_{S,A}, F_{S,B}), and
- the respective PTC thermistor (2) protrudes on both sides from the at least one contact socket (5a, 5b) in longitudinal direction (LR), so that a creapage distance (7) between the at least one contact socket (5a, 5b) and the other contact plate (4a, 4b) is larger than the thermistor thickness (D_{PTC}) of the PTC thermistor (2).

5. The PTC heating module according to one of the preceding claims, **characterised in that**
- an electrically conducting coating (8a, 8b) is fixed on the main side (3a, 3b) of the PTC thermistor (2) and is arranged between the contact side (6a, 6b) of the at least one contact socket (5a, 5b) and the one main side (3a, 3b) of the respective PTC thermistor (2), and
- the geometric surface (F_{B,A}, F_{B,B}) of the coating (8a, 8b) corresponds to the geometric contact surface (F_{K,A,} F_{K,B}).

6. The PTC heating module according to one of the preceding claims, **characterised in that** the at least one contact socket (5a, 5b) is formed integrally with the one contact plate (4a, 4b).

7. The PTC heating module according to one of the preceding claims, **characterised in that**
a geometric cross-sectional area of the at least one contact socket (5a, 5b) increases consistently or in stages from the contact side (6a, 6b) in direction of the one contact plate (4a, 4b).

8. The PTC heating module according to one of the preceding claims, **characterised in that**
- the first contact plate (4a) forms a first housing part (9a) and the other contact plate (4b) forms a second housing part (9b) electrically insulated from the first housing part (9a), and
- the first housing part (9a) and the second housing part (9b) form a housing (9) encasing the respective PTC thermistor (2).

9. The PTC heating module according to claim 8,
**characterised in that** the housing (9) is electrically insulated, at least in sections, by an insulating layer (10) towards the outside.

10. The PTC heating module according to claim 8 or 9,
**characterised in that** the housing (9) is filled, at least in sections, with a heat-conducting and electrically insulating material.

11. The PTC heating module according to one of the preceding claims, **characterised in that** two contact sockets (5a, 5b) are arranged on the respective PTC thermistor (2), which rest against the main surfaces (3a, 3b) of the respective PTC thermistor (2) with the respective contact surfaces (6a, 6b).

12. The PTC heating module according to one of the preceding claims, **characterised in that** the PTC heating module (1) comprises a number of PTC thermistors (2), which in longitudinal direction (LR) are arranged next to each other between the contact plates (4a, 4b) and are electrically contacted thereto.

13. The PTC heating module (1) according to one of the preceding claims, **characterised in that**
a creapage and/or clearance distance amounts to between 110% and 500%, especially between 120% and 300%, of the thermistor thickness of the respective therm istor.

## Patentansprüche

1. PTC-Heizmodul (1) zum Erwärmen eines Fluids,
- wobei das PTC-Heizmodul (1) mindestens einen quaderförmigen PTC-Thermistor (2) mit zwei einander gegenüberliegenden Hauptseiten (3a, 3b) umfasst, die beabstandet sind und eine Thermistordicke (D_{PTC}) des PTC-Thermistors (2) definieren;
- wobei das PTC-Heizmodul (1) zwei Kontaktplatten (4a, 4b) umfasst, zwischen denen der jeweilige PTC-Thermistor (2) angeordnet ist und mit denen der jeweilige PTC-Thermistor (2) elektrisch kontaktiert ist;
- wobei das PTC-Heizmodul (1) mindestens einen Kontaktsockel (5a, 5b) mit einer Kontaktseite (6a, 6b) umfasst, wobei der Kontaktsockel (5a, 5b) auf einer Seite elektrisch leitend mit seiner Kontaktseite (6a, 6b) an der einen Hauptseite (3a, 3b) des jeweiligen PTC-Thermistors (2) anliegt, und auf der anderen Seite elektrisch leitend an der einen Kontaktplatte (4a, 4b) anliegt;
- wobei eine geometrische Kontaktfläche (F_{K,A}, F_{K,B}) zwischen der Hauptseite (3a, 3b) des jeweiligen PTC-Thermistors (2) und der Kontaktseite (6a, 6b) des mindestens einen Kontaktsockels (5a, 5b) kleiner ist als eine geometrische Fläche (F_{PTC}) der Hauptseite (3a, 3b) des jeweiligen PTC-Thermistors (2);
- wobei aufgrund einer Dicke (D_{S}) des mindestens einen Kontaktsockels (5a, 5b) ein Abstand zwischen der einen Kontaktplatte (4a, 4b) und der anderen Kontaktplatte (4a, 4b) vergrößert ist,
- sodass ein lichter Abstand (7a) von der einen Kontaktplatte (4a, 4b) zu der anderen Kontaktlatte (4a, 4b) und ein Kriechwegabstand (7b) von dem mindestens einen Kontaktsockel (5a, 5b) zu der anderen Kontaktplatte (4a, 4b) größer ist als die Thermistordicke (D_{PTC}) des PTC-Thermistors (2),
**dadurch gekennzeichnet, dass** eine geometrische Fläche der jeweiligen Kontaktplatte (4a, 4b) größer ist als die geometrische Fläche der Hauptseite (3a, 3b) des jeweiligen PTC-Thermistors (2).

2. PTC-Heizmodul (1) nach Anspruch 1, **dadurch gekennzeichnet, dass**
- das PTC-Heizmodul (1) zwei Kontaktsockel (5a, 5b) mit den Kontaktseiten (6a, 6b) umfasst, wobei der jeweilige Kontaktsockel (5a, 5b) auf einer Seite elektrisch leitend mit seiner Kontaktseite (6a, 6b) an der jeweiligen Hauptseite (3a, 3b) des PTC-Thermistors (2) anliegt, und auf der anderen Seite elektrisch leitend an der jeweiligen Kontaktplatte (4a, 4b) anliegt, und
- ein Kriechwegabstand (7c) zwischen den zwei Kontaktsockeln (5a, 5b) größer ist als die Thermistordicke (D_{PTC}) des PTC-Thermistors (2).

3. PTC-Heizmodul (1) nach Anspruch 1 oder 2, **dadurch gekennzeichnet, dass**
- eine Breite (B_{PTC}) der Hauptseite (3a, 3b) des jeweiligen PTC-Thermistors (2), die die geometrische Fläche (F_{PTC}) definiert, größer ist als eine Breite (B_{S,A}, B_{S,B}) der Kontaktseite (6a, 6b) des mindestens einen Kontaktsockels (5a, 5b), die eine geometrische Fläche (F_{S,A}, F_{S,B}) definiert, und
- der jeweilige PTC-Thermistor (2) in Breitenrichtung (BR) auf beiden Seiten von dem mindestens einen Kontaktsockel (5a, 5b) übersteht, sodass ein Kriechwegabstand (7) zwischen dem mindestens einen Kontaktsockel (5a, 5b) und der anderen Kontaktplatte (4a, 4b) größer ist als die Thermistordicke (D_{PTC}) des PTC-Thermistors (2).

4. PTC-Heizmodul (1) nach einem der vorstehenden Ansprüche, **dadurch gekennzeichnet, dass**
- eine Länge (L_{PTC}) der Hauptseite (3a, 3b) des jeweiligen PTC-Thermistors (2), die die geometrische Fläche (F_{PTC}) definiert, größer ist als eine Länge (L_{S,A}, L_{S,B}) der Kontaktseite (6a, 6b) des mindestens einen Kontaktsockels (5a, 5b), die die geometrische Fläche (F_{S,A}, F_{S,B}) definiert, und
- der jeweilige PTC-Thermistor (2) in Längsrichtung (LR) auf beiden Seiten von dem mindestens einen Kontaktsockel (5a, 5b) übersteht, sodass ein Kriechwegabstand (7) zwischen dem mindestens einen Kontaktsockel (5a, 5b) und der anderen Kontaktplatte (4a, 4b) größer ist als die Thermistordicke (D_{PTC}) des PTC-Thermistors (2).

5. PTC-Heizmodul nach einem der vorstehenden Ansprüche, **dadurch gekennzeichnet, dass**
- eine elektrisch leitende Beschichtung (8a, 8b) an der Hauptseite (3a, 3b) des PTC-Thermistors (2) befestigt und zwischen der Kontaktseite (6a, 6b) des mindestens einen Kontaktsockels (5a, 5b) und der einen Hauptseite (3a, 3b) des jeweiligen PTC-Thermistors (2) angeordnet ist, und
- die geometrische Fläche (F_{B,A}, F_{B,B}) der Beschichtung (8a, 8b) der geometrischen Kontaktfläche (F_{K,A}, F_{K,B}) entspricht.

6. PTC-Heizmodul nach einem der vorstehenden Ansprüche, **dadurch gekennzeichnet, dass** der mindestens eine Kontaktsockel (5a, 5b) mit der einen Kontaktplatte (4a, 4b) einstückig gebildet ist.

7. PTC-Heizmodul nach einem der vorstehenden Ansprüche, **dadurch gekennzeichnet, dass**
eine geometrische Querschnittsfläche des mindestens einen Kontaktsockels (5a, 5b) von der Kontaktseite (6a, 6b) in Richtung der einen Kontaktplatte (4a, 4b) stetig oder in Stufen zunimmt.

8. PTC-Heizmodul nach einem der vorstehenden Ansprüche, **dadurch gekennzeichnet, dass**
- die erste Kontaktplatte (4a) einen ersten Gehäuseteil (9a) bildet, und die andere Kontaktplatte (4b) einen zweiten Gehäuseteil (9b) bildet, der elektrisch vom ersten Gehäuseteil (9a) isoliert ist, und
- der erste Gehäuseteil (9a) und der zweite Gehäuseteil (9b) ein Gehäuse (9) bilden, das den jeweiligen PTC-Thermistor (2) umgibt.

9. PTC-Heizmodul nach Anspruch 8, **dadurch gekennzeichnet, dass** das Gehäuse (9) mindestens in Abschnitten durch eine Isolierschicht (10) zur Außenseite hin elektrisch isoliert ist.

10. PTC-Heizmodul nach Anspruch 8 oder 9, **dadurch gekennzeichnet, dass** das Gehäuse (9) mindestens in Abschnitten mit einem wärmeleitenden und elektrisch isolierenden Material gefüllt ist.

11. PTC-Heizmodul nach einem der vorstehenden Ansprüche, **dadurch gekennzeichnet, dass** auf dem jeweiligen PTC-Thermistor (2) zwei Kontaktsockel (5a, 5b) angeordnet sind, die an den Hauptflächen (3a, 3b) des jeweiligen PTC-Thermistors (2) mit den jeweiligen Kontaktflächen (6a, 6b) anliegen.

12. PTC-Heizmodul nach einem der vorstehenden Ansprüche, **dadurch gekennzeichnet, dass** das PTC-Heizmodul (1) eine Anzahl von PTC-Thermistoren (2) umfasst, die in Längsrichtung (LR) nebeneinander zwischen den Kontaktplatten (4a, 4b) angeordnet und mit diesen elektrisch kontaktiert sind.

13. PTC-Heizmodul (1) nach einem der vorstehenden Ansprüche, **dadurch gekennzeichnet, dass** ein Kriechweg- und/oder lichter Abstand zwischen 110% und 500%, insbesondere zwischen 120% und 300% der Thermistordicke des jeweiligen Thermistors ausmacht.

## Revendications

1. Module de chauffage PTC (1) pour chauffer un fluide,
- dans lequel le module de chauffage PTC (1) comprend au moins une thermistance PTC cuboïde (2) avec deux côtés principaux (3a, 3b) opposés l'un à l'autre, qui sont espacés l'un de l'autre et définissent une épaisseur de thermistance (D_{PTC}) de la thermistance PTC (2) ;
- dans lequel le module de chauffage PTC (1) comprend deux plaques de contact (4a, 4b), entre lesquelles la thermistance PTC respective (2) est agencée et avec lesquelles la thermistance PTC respective (2) est en contact électrique ;
- dans lequel le module de chauffage PTC (1) comprend au moins une douille de contact (5a, 5b) avec un côté de contact (6a, 6b), la douille de contact (5a, 5b) reposant d'un côté de manière électroconductrice avec son côté de contact (6a, 6b) contre l'un côté principal (3a, 3b) de la thermistance PTC respective (2) et reposant de l'autre côté de manière électroconductrice contre l'une plaque de contact (4a, 4b) ;
- dans lequel une surface de contact géométrique (F_{K,A}, F_{K,B}) entre le côté principal (3a, 3b) de la thermistance PTC respective (2) et le côté de contact (6a, 6b) de l'au moins une douille de contact (5a, 5b) est plus petite qu'une surface géométrique (FPTC) du côté principal (3a, 3b) de la thermistance PTC respective (2) ;
- dans lequel, en raison d'une épaisseur (Ds) de l'au moins une douille de contact (5a, 5b), une distance entre l'une plaque de contact (4a, 4b) et l'autre plaque de contact (4a, 4b) est agrandie,
- de sorte qu'une distance de dégagement (7a) de l'une plaque de contact (4a, 4b) à l'autre plaque de contact (4a, 4b) et une distance de glissement (7b) de l'au moins une douille de contact (5a, 5b) à l'autre plaque de contact (4a, 4b) est plus grande que l'épaisseur de thermistance (D_{PTC}) de la thermistance PTC (2),
**caractérisé en ce qu'**une surface géométrique de la plaque de contact respective (4a, 4b) est plus grande que la surface géométrique du côté principal (3a, 3b) de la thermistance PTC respective (2).

2. Module de chauffage PTC (1) selon la revendication 1, **caractérisé en ce**
- **que** le module de chauffage PTC (1) comprend deux douilles de contact (5a, 5b) avec les côtés de contact (6a, 6b), la douille de contact respective (5a, 5b) reposant d'un côté de manière électroconductrice avec son côté de contact (6a, 6b) contre le côté principal respectif (3a, 3b) de la thermistance PTC (2) et reposant de l'autre côté de manière électroconductrice contre la plaque de contact respective (4a, 4b), et
- **qu'**une distance de rupture (7c) entre les deux douilles de contact (5a, 5b) est plus grande que l'épaisseur de thermistance (D_{PTC}) de la thermistance PTC (2).

3. Module de chauffage PTC (1) selon la revendication 1 ou 2, **caractérisé en ce**
- **qu'**une largeur (B_{PTC}) du côté principal (3a, 3b) de la thermistance PTC respective (2) définissant la surface géométrique (F_{PTC}) est plus grande qu'une largeur (B_{S,A}, B_{S,B}) du côté de contact (6a, 6b) de l'au moins une douille de contact (5a, 5b) définissant une surface géométrique (F_{S,A}, F_{S,B}), et
- **que** la thermistance PTC respective (2) dépasse des deux côtés de l'au moins une douille de contact (5a, 5b) en direction de la largeur (BR), de sorte qu'une distance de glissement (7) entre l'au moins une douille de contact (5a, 5b) et l'autre plaque de contact (4a, 4b) est plus grande que l'épaisseur de thermistance (D_{PTC}) de la thermistance PTC (2).

4. Module de chauffage PTC (1) selon l'une quelconque des revendications précédentes, **caractérisé en ce**
- **qu'**une longueur (L_{PTC}) du côté principal (3a, 3b) de la thermistance PTC respective (2) définissant la surface géométrique (F_{PTC}) est plus grande qu'une longueur (L_{S,A}, L_{S,B}) du côté de contact (6a, 6b) de l'au moins une douille de contact (5a, 5b) définissant la surface géométrique (F_{S,A}, F_{S,B}), et
- **que** la thermistance PTC respective (2) dépasse des deux côtés de l'au moins une douille de contact (5a, 5b) en direction longitudinale (LR), de sorte qu'une distance de glissement (7) entre l'au moins une douille de contact (5a, 5b) et l'autre plaque de contact (4a, 4b) est plus grande que l'épaisseur de thermistance (D_{PTC}) de la thermistance PTC (2).

5. Module de chauffage PTC selon l'une quelconque des revendications précédentes, **caractérisé en ce**
- **qu'**un revêtement électroconducteur (8a, 8b) est fixé sur le côté principal (3a, 3b) de la thermistance PTC (2) et est agencé entre le côté de contact (6a, 6b) de l'au moins une douille de contact (5a, 5b) et l'un côté principal (3a, 3b) de la thermistance PTC respective (2), et
- **que** la surface géométrique (F_{B,A}, F_{B,B}) du revêtement (8a, 8b) correspond à la surface de contact géométrique (F_{K,A}, F_{K,B}).

6. Module de chauffage PTC selon l'une quelconque des revendications précédentes, **caractérisé en ce que** l'au moins une douille de contact (5a, 5b) est formée d'un seul tenant avec l'une plaque de contact (4a, 4b).

7. Module de chauffage PTC selon l'une quelconque des revendications précédentes, **caractérisé en ce**
**qu'**une section transversale géométrique de l'au moins une douille de contact (5a, 5b) augmente régulièrement ou par étapes depuis le côté de contact (6a, 6b) en direction de la première plaque de contact (4a, 4b).

8. Module de chauffage PTC selon l'une quelconque des revendications précédentes, **caractérisé en ce**
- **que** la première plaque de contact (4a) forme une première partie de boîtier (9a) et l'autre plaque de contact (4b) forme une seconde partie de boîtier (9b) isolée électriquement de la première partie de boîtier (9a), et
- **que** la première partie de boîtier (9a) et la seconde partie de boîtier (9b) forment un boîtier (9) renfermant la thermistance PTC respective (2).

9. Module de chauffage PTC selon la revendication 8, **caractérisé en ce que** le boîtier (9) est isolé électriquement, au moins par sections, par une couche isolante (10) vers l'extérieur.

10. Module de chauffage PTC selon la revendication 8 ou 9, **caractérisé en ce que** le boîtier (9) est rempli, au moins par sections, d'un matériau thermoconducteur et isolant électriquement.

11. Module de chauffage PTC selon l'une quelconque des revendications précédentes, **caractérisé en ce que** deux douilles de contact (5a, 5b) sont agencées sur la thermistance PTC respective (2), qui reposent contre les surfaces principales (3a, 3b) de la thermistance PTC respective (2) avec les surfaces de contact respectives (6a, 6b).

12. Module de chauffage PTC selon l'une quelconque des revendications précédentes, **caractérisé en ce que** le module de chauffage PTC (1) comprend un certain nombre de thermistances PTC (2) qui, en direction longitudinale (LR), sont agencées les unes à côté des autres entre les plaques de contact (4a, 4b) et sont en contact électrique avec celles-ci.

13. Module de chauffage PTC (1) selon l'une quelconque des revendications précédentes, **caractérisé en ce qu'**une distance de glissement et/ou de dégagement est comprise entre 110 % et 500 %, en particulier entre 120 % et 300 %, de l'épaisseur de thermistance de la thermistance respective.
